(19) Europäisches Patentamt / European Patent Office / Office européen des brevets

(11) **EP 2 184 125 B1**

(12) **EUROPEAN PATENT SPECIFICATION**

(45) Date of publication and mention
of the grant of the patent:
**13.04.2016 Bulletin 2016/15**

(51) Int Cl.:
***B23C 5/10*** *(2006.01)*

(21) Application number: **08720732.0**

(22) Date of filing: **14.02.2008**

(86) International application number:
**PCT/JP2008/052465**

(87) International publication number:
**WO 2009/028216 (05.03.2009 Gazette 2009/10)**

(54) **BALL END MILL**

KUGELSCHAFTFRÄSER

FRAISE À EXTRÉMITÉ SPHÉRIQUE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **31.08.2007 JP 2007227094**

(43) Date of publication of application:
**12.05.2010 Bulletin 2010/19**

(73) Proprietor: **UNION TOOL CO.**
**Tokyo 140-0013 (JP)**

(72) Inventors:
• **KOSHIO, Jun-Ichi**
**Tokyo 140-0013 (JP)**
• **TAKAHASHI, Shoichi**
**Tokyo 140-0013 (JP)**

(74) Representative: **Kramer Barske Schmidtchen**
**Patentanwälte PartG mbB**
**European Patent Attorneys**
**Landsberger Strasse 300**
**80687 München (DE)**

(56) References cited:
**EP-A1- 0 950 456       JP-A- 09 267 211**
**JP-A- 11 216 608       JP-A- 2001 071 209**
**JP-A- 2002 187 011     JP-A- 2005 034 982**

• **DATABASE WPI Week 199942 Thomson
Scientific, London, GB; AN 1999-501844
XP002666661, -& JP 11 216608 A (HITACHI TOOL
KK) 10 August 1999 (1999-08-10)**

**Description**

TECHNICAL FIELD

The present invention relates to a ball end mill.

BACKGROUND ART

As is disclosed in, for example, Japanese Laid-Open Patent Publication No. 2005-224898, a typical ball end mill has the following constitution: a plurality of spiral-shaped chip discharge grooves formed on the outer circumference of a tool body from the distal end toward the proximal end of the tool, and a ball cutting edge provided respectively at an intersection ridge line of a rake face of the chip discharge grooves and a distal end flank of the tool body. Chips cut by the ball cutting edges are discharged via the chip discharge grooves.

Further ball end mills are known from EP 0 950 456 A1, JP 11 216608 A and JP 2001 071209 A, with EP 0 950 456 A1 disclosing a ball end mill according to the preamble of claim 1.

DISCLOSURE OF THE INVENTION

[Problem To Be Solved By The Invention]

In a conventional ball end mill, the discharge performance of the chip discharge grooves is poor, and when the feeding speed and the cutting depth are increased, chips accumulate particularly at the distal end of the tool. This induces damage such as defects in the ball cutting edges due to recutting caused by the chips and chatter vibration due to chip clogging, and thereby the machining accuracy worsens. Clogging of the chips also leads to an increase in cutting resistance, which causes damage and chipping and the like, thereby shortening the life of the tool.

In order to solve the above-described problems, the present invention provides a ball end mill exhibiting extremely superior usefulness such that, by virtue of grooves being provided at the distal end of the tool, chips can also be discharged from the center of the tool, chips are prevented from accumulating near the distal end of the ball cutting edges, and chips can be satisfactorily discharged even if the feeding speed and the cutting depth are increased, thus enabling high-efficiency machining of difficult-to-machine materials with high precision. Furthermore, damage and other adverse circumstances can be minimized because chip clogging does not occur, thereby extending the service life and enabling improvement of machined surface roughness.

[Means For Solving The Problems]

The main points of the present invention are described below with reference to the attached drawings.

The present invention is a ball end mill according to claim 1. Further developments are given in the dependent claims.

In the ball end mill according to a first preferred embodiment, a rotational diameter $\phi D_{23}$ of the intersection 23 of the intersection ridge line 21 between the distal end flanks 14 and the ball cutting edge 15 satisfies the following formula (1):

$$2 \times (r + 0.01) \times \sin\alpha \geq \phi D_{23} \qquad\qquad (1)$$

wherein,

$\alpha = \cos^{-1} (r / (r + 0.01))$
r: tool radius (1/2 of the tool outer diameter D)
$\alpha$: angle formed by the tool rotational axis and a line connecting a point a at a distance of the tool radius r

from the distal end of the tool on the tool rotational axis and the intersection of the intersection ridge line between the distal end flanks and the ball cutting edge.

In the ball end mill according to a second preferred embodiment, the length of the intersection ridge line 21 between the distal end flanks 14 is set at from "0.005 mm" to "45% of the rotational diameter of the intersection."

In the ball end mill according to a third preferred embodiment, there are 2 ball cutting edges 15.

In the ball end mill according to a fourth preferred embodiment, there are 4 ball cutting edges 15.

In the ball end mill according to an fifth preferred embodiment, an angle $\gamma12$ formed by a third straight line described below and a fourth straight line described below is set at 70° to 88°;

- the third straight line passes through an intersection point a12 of the ball cutting edge, provided on the intersection ridge line of one distal end flank 14 and the rake face of the chip discharge groove, and a circle c12 centered on the center of rotation O' of the tool and having a radius of 10% of the outer diameter of the tool; and the center of rotation O' of the tool; and
- the fourth straight line passes through an intersection point b12 of the ridge line 16 on the rearward side in the rotational direction of the tool of the distal end flank 14, which is positioned on the forward side in the rotational direction of the tool of the ball cutting edge on which the intersection point a12 is set, and the circle c12; and the center of rotation O' of the tool.

In the ball end mill according to a sixth preferred embodiment, the width of the distal end flanks 14 is set at from 0.005 mm to 3% of the outer diameter of the tool in the range of 10% of the outer diameter of the tool from the center of rotation O' of the tool.

In the ball end mill according to a seventh preferred embodiment, there are 6 ball cutting edges 15.

[Effects Of The Invention]

Since the present invention is constituted as described above, there can be provided a ball end mill that exhibits extremely superior usefulness, prevents the accumulation of chips near the distal end of the ball cutting edges, and allows chips to be satisfactorily discharged even if the feeding speed and the cutting depth are increased, thus enabling high efficiency machining of difficult-to-machine materials with high precision. Furthermore, damage and other adverse circumstances are minimized because chip clogging does not occur, thereby improving the service life and enabling improvement of machined surface roughness.

BRIEF DESCRIPTION OF THE DRAWINGS

FIG. 1 is a schematic plan view of a first embodiment of the ball end mill of the present invention;
FIG. 2 is an expanded schematic plan view of the center at the distal end of the tool before the grooves are provided of the first embodiment;
FIG. 3 is an expanded schematic plan view of the distal end of the tool of the first embodiment;
FIG. 4 is an expanded schematic side view of the distal end of the tool of the first embodiment;
FIG. 5 is a schematic view of the first embodiment;
FIG. 6 is a schematic plan view of the first embodiment;
FIG. 7 is a table showing the results of cutting tests;
FIG. 8 is a schematic plan view of a second embodiment; and
FIG. 9 is an expanded schematic plan view of the distal end of the tool of the second embodiment.

BEST MODE FOR CARRYING OUT THE INVENTION

Preferred embodiments of the present invention will be briefly described while the operation of the present invention will be described based on the drawings.

Chips are satisfactorily discharged from the center of the distal end of the tool as well by the grooves 20 provided on the distal end of the tool, and thus chips do not readily accumulated near the distal end of the ball cutting edges 15. Therefore, chip clogging tends not to occur, and damage to the tool such as defects in the ball cutting edges 15 and chipping is prevented, so that the service life can be extended. Also, flank friction of the tool caused by jamming of the chips is suppressed, and the machined surface roughness is thereby improved.

In addition, for example, a chip pocket (entrance part of the chip discharge grooves 12; gash in the embodiments described below) at the distal end of the tool can be made as wide as possible by making the intervals between the distal end flanks 14 as wide as possible; e.g., by narrowing the width of the distal end flanks 14. Therefore, even when cutting difficult-to-machine materials such as quenched steel having high hardness under high efficiency conditions, chips do not accumulate near the ball cutting edges 15 and are satisfactorily discharged from the chip discharge grooves 12 through the chip pocket. Thus, chatter vibration during cutting is minimized and gouges on the machined surface can be minimized, thereby enabling high precision machining.

Examples

Specific examples of the present invention will be explained below based on the drawings.

The present embodiment is a four-cutting edge ball end mill in which four spiral-shaped chip discharge grooves 12 are formed on the outer circumference of a tool body 11 from the distal end toward the proximal end of the tool, a ball cutting edge 15 is provided respectively at an intersection ridge line of a rake face of the chip discharge grooves 12 and a distal end flank 14 of the tool body 11, and a peripheral cutting edge 17 is formed on the intersection ridge line of the rake face of the chip discharge grooves 12 and the outer peripheral surface of the tool body 11. The ball end mill has a shank for connecting to a tool attachment part of a milling machine on the proximal end, and is attached to the milling machine to perform cutting such as 3-D machining on a metal such as iron and steel materials.

A gash that is substantially L-shaped when viewed from the side, composed of a gash face provided on the distal end side of the rake face and a gash opposing face 12a opposing the gash face provided on a groove wall face opposite to the rake face, is formed on the chip discharge grooves 12 (in the present embodiment, the gash is a part of the chip discharge groove 12).

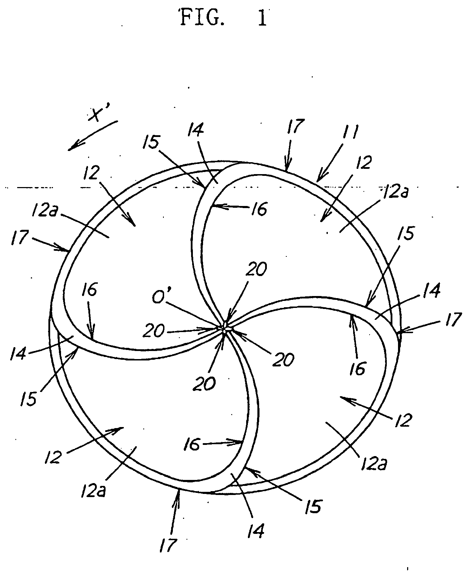

As shown in FIG. 1, at the distal end of the tool of the present embodiment, one groove 20, having a substantially V-shaped or U-shaped cross-section and extending outwardly from the center of rotation O' of the tool, is provided between respective ball cutting edges 15.

Each part will be described in detail below.

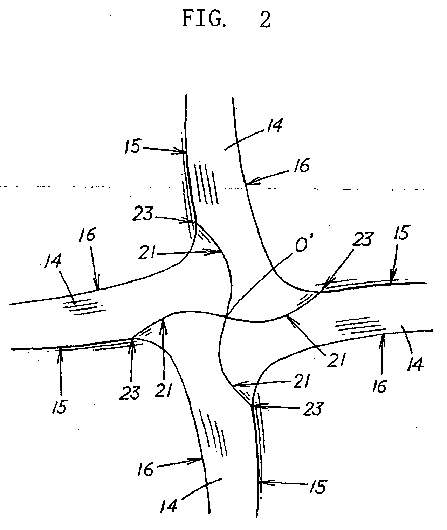

The intersection ridge line 21 between the distal end flanks 14 is connected to the tool center side of the ball cutting edge 15, and as shown in FIG. 2, the intersection ridge line 21 is constituted to connect with the center of rotation O' of the tool.

The grooves 20 are provided so that a portion of the intersection ridge line 21 toward the tool outer side remains.

In other words, in the present embodiment, the grooves 20 are provided at the center of the distal end of the tool of a typical ball end mill and the (a portion of the) intersection ridge line 21 of the distal end flanks 14 is removed. Thereby, the discharge efficiency of chips accumulating near the center of rotation O' of the tool is improved, and damage of the tool and the machined surface by jamming of the chips can be suppressed.

In order to have a portion of the intersection ridge line 21 toward the tool outer side remain, the grooves 20 are provided (the vicinity of the center of rotation O' of the tool is recessed), whereby the intersection ridge line 21 and the distal end flanks 14 forming the intersection ridge line 21 exist at the tool center side of the intersection 23, which becomes the most distal end of the tool. The intersection ridge line 21 is the same height as the intersection 23 (in the axial direction), or is a ridge line that gently slopes so as to descend from the intersection 23 toward the center of the tool. Thereby, cutting marks by the intersection 23, which becomes the most distal end of the tool, are not easily left on the machined surface of a machined material.

Chips accumulating near the center of rotation O' of the tool can be discharged more efficiently, and damage of the tool and the machined surface by jamming of the chips can be suppressed even if the entire intersection ridge line 21 is removed. However, in this case, the tool center side of the intersection 23 can easily take on an acuminate shape that drops at an acute angle, and thus cutting marks by the intersection 23 are easily left on the machined surface of the machined material. In this case, the grooves 20 are given a U-shaped cross-section and the grooves 20 are provided so that a circular arc-shaped groove bottom part intersects with -the ball cutting edge 15, and it is preferable for the intersection 23, which becomes the most distal end of the tool, to not be too acuminate.

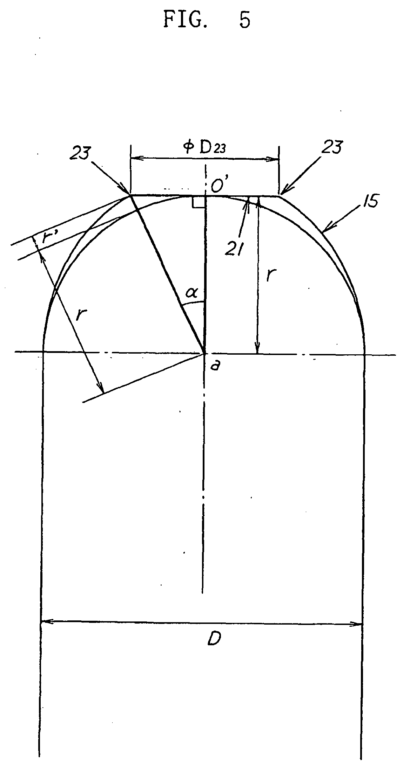

The rotational diameter $\phi D_{23}$ (refer to FIG. 5) of the intersection 23 of the intersection ridge line 21 between the distal end flanks 14 and the ball cutting edge 15 is constituted to satisfy the following formula (1). r' in FIG. 5 represents the error (referred to as "ball R error" below) relative to the curvature radius r of the ball cutting edge 15, which is a reference, and is 0.01 in the present embodiment. In the drawing, reference numeral D is the outer diameter of the tool.

$$2 \times (r + 0.01) \times \sin\alpha \geq \phi D_{23} \tag{1}$$

wherein,

$$\alpha = \cos^{-1}(r / (r + 0.01))$$

r: tool radius (1/2 of the tool outer diameter D)
$\alpha$: angle formed by the tool rotational axis and a line connecting a point a at a distance of the tool radius r

from the distal end of the tool on the tool rotational axis and the intersection 23

In other words, if the rotational diameter increases beyond the above numerical range, the ball R error of a part of the intersection 23 will exceed 0.01 and it will be impossible to achieve the ball R precision generally required; thus, the rotational diameter is set in the above range. More preferably, the rotational diameter is constituted to satisfy the following formula (2) (r' should be set to 0.005). In this case, the tool will become highly precise, the ball R error of the part of the intersection 23 being within 0.005.

$$2 \times (r + 0.005) \times \sin\alpha \geq \phi D_{23} \qquad\qquad (2)$$

wherein,

$$\alpha = \cos^{-1} (r / (r + 0.005))$$

The main type of cutting performed by an end mill is lateral direction machining; however, particularly with ball end mills, there are problems with the machined surface roughness when carrying out flat machining using the distal end of the tool. As shown in FIG. 2, if the intersection ridge line 21 is connected with the center of rotation O' of the tool, the fact that the center of rotation O' of the tool contacts the machined material at a machining circumferential speed of 0 mm/min means that the center of rotation O' of the tool will be dragged while point-contacting the machined material when the machined material or the end mill is moved, and this can worsen the surface roughness of the machined material. Regarding this point, in the present embodiment, the center of rotation O' of the tool, which has a machining circumferential speed of 0 mm/min, does not contact the machined material, and since damage due to jamming of the chips is suppressed as explained above, the machined surface roughness can be improved over a constitution like that shown in FIG. 2.

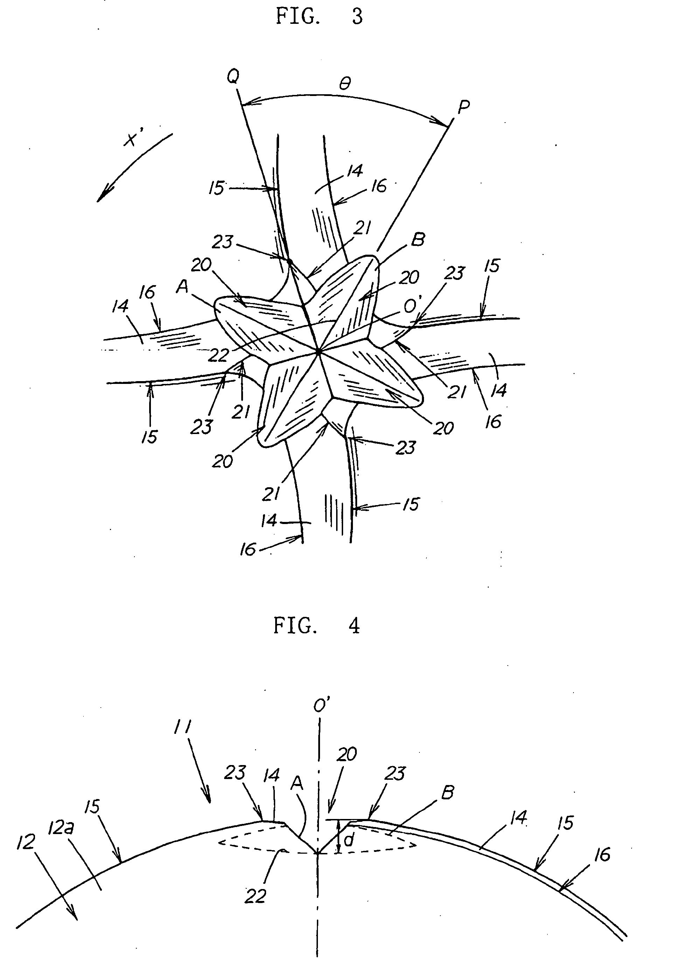

The grooves 20 will be explained in further detail below using FIGS. 3 and 4.

as explained above, the grooves 20 extend outwardly from the center of rotation O' of the tool, and one groove 20 is provided between respective ball cutting edges 15 for a total of four grooves 20. Specifically, the four grooves 20 are formed as follows: contact transferring the outer edge of a grindstone having a substantially V-shaped cross section so that it is substantially orthogonal to the rotational axis of the tool in the direction from the upper left to the lower right in FIG. 3 passing through the center of rotation O' of the tool, or moving a grindstone facing toward the above-described direction in a direction perpendicular to the rotational axis of the tool, to grind a groove A; and contact transferring the outer edge of a grindstone having a substantially V-shaped cross section so that it is substantially orthogonal to the rotational axis of the tool in the direction from the upper right to the lower left in FIG. 3 passing through the center of rotation O' of the tool, or moving a grindstone facing toward the above-described direction in a direction perpendicular to the rotational axis of the tool, to grind a groove B. In other words, the grooves A and B can be formed by moving a grindstone facing toward a predetermined direction in the axial direction of the tool relative to the distal end of the tool to contact transfer the shape of the grindstone to the distal end of the tool so that it is substantially orthogonal to the rotational axis of the tool, or by moving the grindstone in a predetermined direction in a direction perpendicular to the rotational axis of the tool, to grind the grooves. Therefore, the groove bottom part of the grooves 20 in the present embodiment has a substantially straight line shape substantially orthogonal to the rotational axis of the tool.

In the present embodiment, since the four ball cutting edges are provided at intervals of 90°, the grooves A and B are provided so as to be orthogonal to each other. By forming the grooves 20 as explained above, the grooves 20 can be provided in an amount equal to the number of cutting edges in a number of times of machining which is half of the number of cutting edges of the ball end mill (forming the grooves extending in a straight line shape by passing through the center of rotation O' of the tool a number of times which is half the number of cutting edges). Thereby, the grooves 20 can be formed extremely simply and highly efficiently. In the present embodiment, the grooves 20 have a substantially V-shaped cross-section, but they can also have a substantially U-shaped cross section.

The center of the distal end of the tool including the center of rotation O' of the tool is thereby caused to descend in the axial direction, thus forming a space in which chips can be discharged without the center of the distal end of the tool contacting the machined surface.

The grooves 20 are arranged to be displaced by a predetermined angle relative to the ball cutting edges 15 in the rotational direction of the tool. In detail, the grooves 20 are provided so as to be displaced by from 20° to a minus 20° angle formed by adjacent ball cutting edges 15 on the rearward side in the rotational direction of the tool relative to the ball cutting edges 15 in the rotational direction of the tool. In other words, in the case of the present embodiment, they are displaced by 20° to 70°. Specifically, an angle θ, formed by a center line P (groove bottom part center line P) (passing through the center of rotation O' of the tool) of the groove 20 and a line Q passing through the intersection 23 of the intersection ridge line 21 between the distal end flanks 14 and the ball cutting edge 15 and the center of rotation

O' of the tool, is set to be from 20° to a minus 20° angle formed by adjacent ball cutting edges 15 on the rearward side in the rotational direction of the tool. If the angle θ is less than 20°, the back up strength of the distal end of the ball cutting edges will significantly decrease, and the tool distal end side of the ball cutting edge 15 will easily chip. If the angle θ exceeds a minus 20° angle formed by adjacent ball cutting edges 15 on the rearward side in the rotational direction of the tool, a part of the rake face at the distal end of the ball cutting edge will be removed, and thus the cutting strength will decrease and the tool distal end side of the ball cutting edge 15 will easily chip. In the present embodiment, the ball end mill has 4 cutting edges and the angle θ is set at approximately 40°. In particular, it is preferable for the above-described angle to be set in the range of ±10° relative to 1/2 of the angle formed by adjacent ball cutting edges 15 (in the present embodiment, it is preferable to displace the grooves 20 by 35° to 55° relative to the ball cutting edges 15 in the rotational direction of the tool). In this case, the grooves 20 can be arranged substantially in the center between the ball cutting edges 15, and a stable cutting strength can be ensured.

The length of the intersection ridge line 21 between the distal end flanks 14 at the distal end of the tool is set at from 0.005 mm to 45% of the rotational diameter $\phi D_{23}$ of the intersection 23. A length of 0.005 mm or above is ensured so that the intersection 23 (most distal end of the tool) does not become acute. However, if the angle formed by the intersection ridge line 21 between the distal end flanks and the ball cutting edge 15, which constitutes the intersection 23, is acute, cutting marks are easily left on the machined surface, and thus it is desirable to make this angle as obtuse as possible. In order to provide the necessary chip pocket of the grooves 20 and discharge chips, the length of the intersection ridge line 21 between the distal end flanks 14 is 45% or less of the rotational diameter $\phi D_{23}$. In particular, the length is preferably 20% to 40% of the rotational diameter $\phi D_{23}$ of the intersection 23. In this case, the intersection ridge line 21 between the distal end flanks 14 can be reliably provided, and the intersection ridge line 21 will be long enough so that it will not readily be worn down by friction during cutting. Furthermore, a necessary groove width of the grooves 20 and stable chip discharge performance can be ensured, and thereby damage to the flanks of the tool due to jamming of the chips can be suppressed and a further improved machined surface roughness can be realized.

The depth d (refer to FIG. 4) of the grooves 20 relative to the intersection 23 (most distal end) of the ball cutting edge 15 is set at from 0.2 to 10% of the outer diameter of the tool. If it is less than 0.2%, the chip pocket will be insufficient and chips can easily accumulate at the center of the distal end of the tool, and if it exceeds 10%, the strength of the distal end of the tool significantly decreases, and defects can readily arise. In particular, setting the depth in a range of 0.5% to 2% is preferable. This depth is the minimum depth which is necessary to enable stable chip discharge at the center of the distal end of the ball, and thus efficient production can be achieved. In the present embodiment, the ball end mill has 4 cutting edges and the depth is set at approximately 1.0%. In the case that the groove bottom part 22 of the grooves 20 is machined so that an R-shape of the grindstone is transferred, the groove bottom part 22 has an R-shape as shown in FIG. 4 (in the case that the grooves 20 are formed by moving a grindstone in a direction perpendicular to the rotational axis of the tool as explained above, the groove bottom part 22 will be a straight line orthogonal to the rotational axis of the tool).

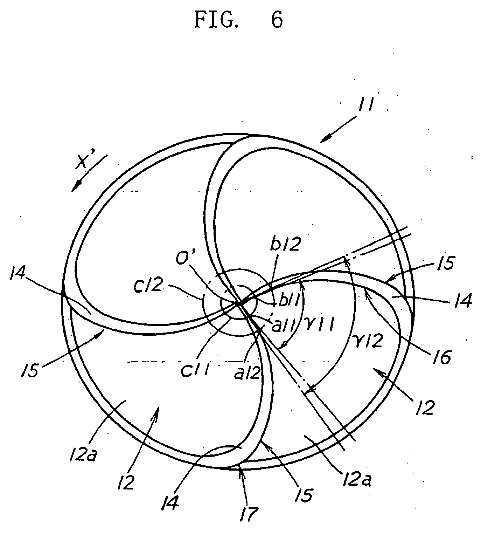

In the present embodiment, as shown in FIG. 6, an angle γ11 of 70° to 88° is formed by a first straight line and a second straight line. The first straight line passes through an intersection point a11 of the ball cutting edge 15, provided on the intersection ridge line of one distal end flank 14 and the rake face (gash face) of the chip discharge groove 12, and a circle c11 centered on the center of rotation O' of the tool and having a radius of 5% of the outer diameter of the tool; and the center of rotation O' of the tool. The second straight line passes through an intersection point b11 of the ridge line 16 on the rearward side in the rotational direction of the tool of the distal end flank 14, and the circle c11; and the center of rotation 0' of the tool, the distal end flank 14 being positioned on the forward side in the rotational direction of the tool of the ball cutting edge 15 on which the intersection point a11 is set. In FIG. 6, the grooves 20 are omitted for the sake of explanation.

In the present embodiment, the second straight line passes through the intersection point b11 of the intersection ridge line 16 of the groove wall face (gash opposing face 12a) opposing the rake face of the chip discharge groove 12 forming the ball cutting edge 15 and another distal end flank 14, and the center of rotation O' of the tool. In the drawings, reference symbol X' is the rotational direction of the tool.

An angle γ12 of 70° to 88° is formed by a third straight line and a fourth straight line. The third straight line passes through intersection point a12 of the ball cutting edge 15, provided on the intersection ridge line of one distal end flank 14 and the rake face of the chip discharge groove 12, and a circle c12 centered on the center of rotation O' of the tool and having a radius of 10% of the outer diameter of the tool; and the center of rotation O' of the tool. The fourth straight line passes through an intersection point b12 of the ridge line 16 on the rearward side in the rotational direction of the tool of the distal end flank 14, which is positioned on the forward side in the rotational direction of the tool of the ball cutting edge 15 on which the intersection point a12 is set, and the circle c12; and the center of rotation O' of the tool. In the present embodiment, the fourth straight line passes through the intersection point b12 of the intersection ridge line 16 of the groove wall face opposing the rake face of the chip discharge groove 12 forming the ball cutting edge 15 and another distal end flank 14, and the center of rotation O' of the tool.

In the present embodiment, by making the width of the distal end flanks 14 as small as possible, specifically by setting the width at from 0.005 mm to 3% of the outer diameter of the tool in the range of 10% of the outer diameter of the tool (diameter of the rotational orbit of the peripheral cutting edge 17) from the center of rotation O' of the tool, $\gamma 11$ and $\gamma 12$ can be set at from 70° to 88°, and the chip discharge grooves 12 (chip pocket) formed between the distal end flanks 14 can be made wide.

The width of the distal end flanks 14 gently tapers from the outside of the tool toward the center of the tool, and, with the exception of machining error, is substantially fixed near the center of rotation of the tool (approximately in the range of 5% of the outer diameter of the tool from the center of rotation O' of the tool).

Specifically, if $\gamma 11$ or $\gamma 12$ is less than 70°, the chips to be discharged along the rake face cannot be discharged satisfactorily, and accumulate toward the groove wall face opposite of the rake face. Therefore, the chips do not flow smoothly along the rake face, producing defects in the ball cutting edges 15 and chatter vibration, and diminished machining accuracy.

If $\gamma 11$ or $\gamma 12$ exceeds 88°, the width of the distal end flanks 14 becomes too small, the amount of backup of the ball cutting edges 15 is insufficient, and the rigidity decreases too much. Further, if $\gamma 11$ or $\gamma 12$ becomes larger than the angle formed by adjacently arranged ball cutting edges 15 (for example, 90° or more in a 4-cutting edge ball end mill in which the ball cutting edges are arranged to be evenly divided), the distal end flanks 14 cannot be formed and ball cutting edges 15 having a desired form accuracy cannot be obtained; good cutting operation, therefore, cannot be exhibited.

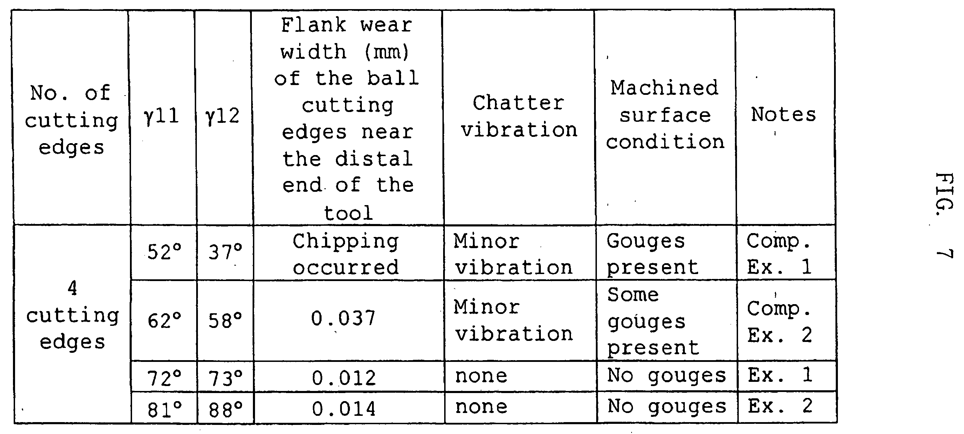

Accordingly, it is preferable for both $\gamma 11$ and $\gamma 12$ to be set within the numerical ranges described above. FIG. 7 is a table showing the results of cutting tests in which $\gamma 11$ and $\gamma 12$ are changed to various angles.

The tool used in the cutting tests was a 4-cutting edge R2 ball end mill, and the machined material was SKD61 (50HRC). The work- was performed at a rotational speed of 15,000 min$^{-1}$, a feeding speed of 4,500 mm/min, a cutting depth in the axial direction of 1.2 mm, a cutting depth in the radial direction of 1.2 mm, a cutting distance of 30 m, and the coolant was airblow.

As is clear from comparing Comparative Examples 1 and 2, as $\gamma 11$ and $\gamma 12$ become larger, it was confirmed that chipping of the end cutting edge did not occur, flank wear width decreased, and chatter vibration and gouging of the machined surface were suppressed. In Experimental Examples 1 and 2, in which $\gamma 11$ and $\gamma 12$ satisfied the above-described angular ranges, it was confirmed that no chatter vibration or gouging of the machined surface occurred at all.

In other words, it was confirmed that by making $\gamma 11$ and $\gamma 12$ wide, chips could be smoothly discharged; recutting of chips and chip clogging, which occur when chips accumulate near the ball cutting edges, were eliminated; a reduction in cutting resistance was accompanied by a reduction in flank wear width; and both chatter vibration and gouging of the machined surface could be minimized.

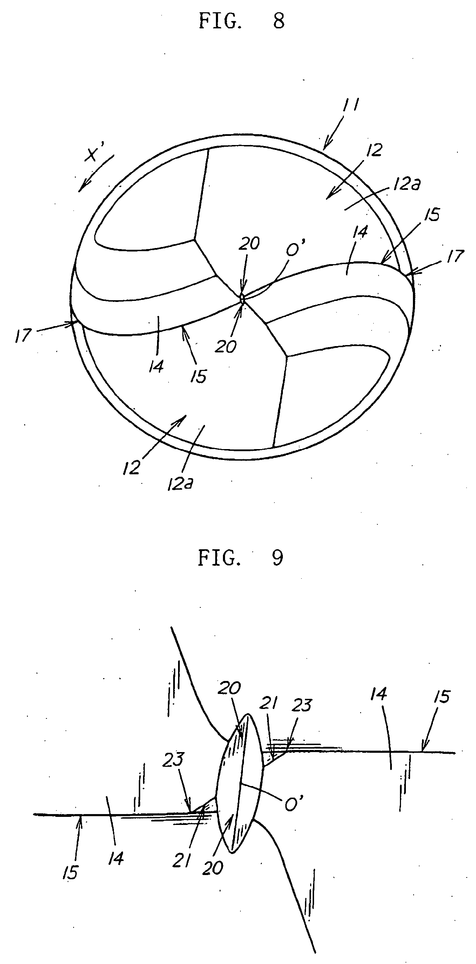

The present embodiment is a 4-cutting edge ball end mill. However, the above explanations also apply to ball end mills with another even number of cutting edges, such as a 2-cutting edge or 6-cutting edge ball end mill. For example, in the case of 2 cutting edges, as shown in FIGS. 8 and 9, the ball end mill has two grooves 20 (when machined as explained above, the number of grooves machined is one). In this case, the rotational diameter $\phi D_{23}$, the length of the intersection ridge line 21, the depth d, and the numerical range of the displacement angle relative to the ball cutting edges 15 are the same as explained above. In the case of two cutting edges, the displacement angle relative to the ball cutting edges 15 is from 20° to 160° relative to the ball cutting edges 15 in the rotational direction of the tool, and preferably 80° to 100°.

Since the present embodiment is constituted as explained above, chips are satisfactorily discharged from the center of the distal end of the tool as well by the grooves 20 provided on the distal end of the tool, and thus chips do not readily accumulate near the distal end of the ball cutting edges 15. Therefore, chip cloggage tends not to occur, damage to the tool such as defects in the ball cutting edges 15 and chipping can be prevented, and flank wear width can be reduced; the service life can thus be extended. Also, the machined surface roughness is improved by suppressing jamming of the chips.

In addition, a chip pocket (entrance part of the chip discharge groove 12; gash in the embodiments described below) at the distal end of the tool can be made as wide as possible by making the intervals between the distal end flanks 14 as wide as possible; e.g., by narrowing the width of the distal end flanks 14. Therefore, even when cutting difficult-to-machine materials such as quenched steel having high hardness under high efficiency conditions, chips do not accumulate near the ball cutting edges 15 and are satisfactorily discharged from the chip discharge grooves 12 through the chip pocket. Thus, chatter vibrations during cutting are suppressed and gouges on the machined surface can be suppressed, thereby enabling high precision machining.

By setting the center height (distance from the ball cutting edge 15 at the center of the distal end of the tool to a center line passing through the center of rotation O' of the tool, the line being substantially parallel to the ball cutting edge 15) further away from the center line in the rotational direction (by raising the center height), when forming the flanks, the center of the distal end of the tool can be set lower than the intersection 23, as with the grooves 20. However, in this case, the cutting angle operating on the machined material becomes obtuse toward the ball distal end, and this causes the cutting performance to deteriorate and chipping can occur toward the distal end of the ball cutting edges. Regarding this point, in the present embodiment, providing the grooves 20 without having to raise the center height (the ball cutting edges 15 are near the center) produces the effects of minimizing damage to the flanks and machined surface, and improving machined surface roughness.

Accordingly in the present embodiment, there can be provided a 4-cutting edge ball end mill that exhibits highly exceptional utility, characterized in that the chips are prevented from accumulating near the distal end of the ball cutting edges, and chips can be satisfactorily discharged even if the feeding speed and the cutting depth are increased, thus enabling high efficiency machining of difficult-to-machine materials with high precision. Furthermore, damage or other adverse events are minimized because chip cloggage does not occur, thereby improving the service life and enabling a good machined surface roughness to be obtained.

**Claims**

1. A ball end mill in which a plurality of spiral-shaped chip discharge grooves (12) are formed on an outer circumference of a tool body (11) from a distal end toward a proximal end of the tool, and a ball cutting edge (15) is provided respectively at an intersection ridge line between a rake face of the chip discharge grooves (12) and a distal end flank (14) of the tool body (11), the ball end mill having two or more ball cutting edges (15) at the distal end; having one or more grooves (20) that are substantially V-shaped or U-shaped in cross-section, extend outwardly from the center of rotation (O') of the tool, and are provided between respective ball cutting edges (15) at the distal end of the tool; and having the one or more grooves (20) provided so as to be displaced by a predetermined angle relative to the ball cutting edge (15) in the rotational direction of the tool,
   wherein
   the predetermined angle is defined as an angle in which an angle ($\theta$), formed by:

   - a center line of each of the one or more grooves (20); and
   - a line passing through the intersection (23) of the intersection ridge line (21) between the distal end flanks (14) and the ball cutting edge (15) and a center of rotation (O') of the tool,

   is set to be in the range of 20° to a minus 20° angle formed by adjacent ball cutting edges (15) on the rearward side in the rotational direction of the tool, and

   a depth (d) of the one or more grooves (20) relative to the most distal end of the tool is set at from 0.2 to 10% of the outer diameter of the tool,

   **characterized in that**
   an intersection ridge line (21) between the distal end flanks (14) is connected to a tool center side of the ball cutting edge (15), and the one or more grooves (20) are provided so that a portion of the intersection ridge line (21) toward a tool outer side remains.

2. The ball end mill according to claim 1, **characterized in that** a rotation diameter $\phi D_{23}$ of an intersection (23) of the intersection ridge line (21) between the distal end flanks (14) and the ball cutting edge (15) satisfies the following formula (1):

$$2 \times (r + 0.01) \times \sin\alpha \geq \phi D_{23} \qquad\qquad (1)$$

   wherein,

   $\alpha = \cos^{-1}(r / (r + 0.01))$
   r: tool radius (1/2 of the tool outer diameter D)
   $\alpha$: angle formed by the tool rotational axis and a line connecting a point a at a distance of the tool radius r

   from the distal end of the tool on the tool rotational axis and the intersection (23) of the intersection ridge line (21) between the distal end flanks (14) and the ball cutting edge (15).

3. The ball end mill according to claim 2, **characterized in that** a length of the intersection ridge line (21) between the distal end flanks (14) is set at from 0.005 mm to 45% of the rotational diameter of the intersection.

**4.** The ball end mill according to claim 1, **characterized in that** there are two ball cutting edges (15).

**5.** The ball end mill according to claim 3, **characterized in that** there are four ball cutting edges (15).

**6.** The ball end mill according to claim 5, **characterized in that** an angle $\gamma12$ formed by a third straight line described below and a fourth straight line described below is set at 70° to 88°:

- the third straight line passes through an intersection point (a12) of the ball cutting edge (15), provided on the intersection ridge line of one distal end flank (14) and the rake face of the chip discharge groove (12), and a circle (c12) centered on the center of rotation (O') of the tool and having a radius of 10% of the outer diameter of the tool; and the center of rotation (O') of the tool, and
- the fourth straight line passes through an intersection point (b12) of the ridge line (16) on the rearward side in the rotational direction of the tool of the distal end flank (14), which is positioned on the forward side in the rotational direction of the tool of the ball cutting edge (15) on which the intersection point (a12) is set, and the circle (c12); and the center of rotation (O') of the tool.

**7.** The ball end mill according to claim 6, **characterized in that** a width of the distal end flanks (14) is set at from 0.005 mm to 3% of the outer diameter of the tool in the range of 10% of the outer diameter of the tool from the center of rotation (O') of the tool.

**8.** The ball end mill according to claim 3, **characterized in that** there are six ball cutting edges (15).

**Patentansprüche**

**1.** Kugelschaftfräser, in dem eine Vielzahl von spiralförmigen Spanabführnuten (12) auf einem äußeren Umfang eines Werkzeugkörpers (11) von einem entfernten Ende in Richtung eines nahen Endes des Werkzeugs ausgebildet sind, und eine Kugelschneidkante (15) entsprechend an einer Überschneidungskammlinie zwischen einer Spanfläche der Spanabführnuten (12) und einer entfernten Endflanke (14) des Werkzeugkörpers (11) vorgesehen ist, wobei der Kugelschaftfräser zwei oder mehr Kugelschneidkanten (15) an dem entfernten Ende aufweist; eine oder mehrere Nuten (20) aufweist, die im Querschnitt im Wesentlichen V-förmig oder U-förmig sind, sich von dem Drehzentrum (O') des Werkzeugs nach außen erstrecken, und zwischen entsprechenden Kugelschneidkanten (15) an dem entfernten Ende des Werkzeugs vorgesehen sind; und die eine oder mehrere Nuten (20) derart vorgesehen aufweist, dass sie um einen vorgegebenen Winkel relativ zu der Kugelschneidkante (15) in der Drehrichtung des Werkzeugs versetzt ist bzw. sind,
wobei
der vorgegebene Winkel als ein Winkel definiert ist, in dem ein Winkel ($\theta$) gebildet ist durch:

- eine Mittenlinie von jeder der einen oder mehreren Nuten (20); und
- eine Linie, die durch die Überschneidung (23) der Überschneidungskammlinie (21) zwischen der entfernten Endflanke (14) und der Kugelschneidkante (15) und ein Drehzentrum (O') des Werkzeugs läuft,

festgelegt ist, dass er sich in dem Bereich von 20° bis zu einem Minus-20°-Winkel befindet, der durch angrenzende Kugelschneidkanten (15) auf der Rückseite in der Drehrichtung des Werkzeugs gebildet ist, und

eine Tiefe (d) der einen oder mehreren Nuten (20) relativ zu dem am weitesten entfernten Ende des Werkzeugs auf von 0,2 bis zu 10% des Außendurchmessers des Werkzeugs festgelegt ist,

**dadurch gekennzeichnet, dass**
eine Überschneidungskammlinie (21) zwischen den entfernten Endflanken (14) mit einer Werkzeugmittenseite der Kugelschneidkante (15) verbunden ist, und die eine oder mehrere Nuten (20) derart vorgesehen sind, dass ein Bereich der Überschneidungskammlinie (21) in Richtung der Werkzeugaußenseite verbleibt.

**2.** Kugelschaftfräser nach Anspruch 1, **dadurch gekennzeichnet, dass** ein Drehdurchmesser $\varnothing D_{23}$ einer Überschneidung (23) der Überschneidungskammlinie (21) zwischen den entfernten Endflanken (14) und der Kugelschneidkante (15) die folgende Formel (1) erfüllt:

$$2 \times (r + 0{,}01) \times \sin\alpha \geq \emptyset D_{23} \qquad\qquad (1)$$

wobei

$$\alpha = \cos^{-1}(r / (r + 0{,}01))$$

r: Werkzeugradius (1/2 des Werkzeugaußendurchmessers D)

$\alpha$: Winkel, der zwischen der Werkzeugdrehachse und einer Linie gebildet wird, die einen Punkt a in einem Abstand des Werkzeugradius r verbindet

von dem entfernten Ende des Werkzeugs auf der Werkzeugdrehachse und der Überschneidung (23) der Überschneidungskammlinie (21) zwischen den entfernten Endflanken (14) und der Kugelschneidkante (15).

3. Kugelschaftfräser nach Anspruch 2, **dadurch gekennzeichnet, dass** eine Länge der Überschneidungskammlinie (21) zwischen den entfernten Endflanken (14) auf von 0,005 mm bis zu 45% des Drehdurchmessers der Überschneidung festgelegt ist.

4. Kugelschaftfräser nach Anspruch 1, **dadurch gekennzeichnet, dass** es zwei Kugelschneidkanten (15) gibt.

5. Kugelschaftfräser nach Anspruch 3, **dadurch gekennzeichnet, dass** es vier Kugelschneidkanten (15) gibt.

6. Kugelschaftfräser nach Anspruch 5, **dadurch gekennzeichnet, dass** ein Winkel $\gamma 12$, der durch eine dritte gerade nachfolgend beschriebene Linie und eine vierte gerade nachfolgend beschriebene Linie gebildet ist, auf 70° bis 88° festgelegt ist:

- die dritte gerade Linie läuft durch einen Überschneidungspunkt (a12) der Kugelschneidkante (15), der auf der Überschneidungskammlinie der einen entfernten Endflanke (14) und der Spanfläche der Spanabführnut (12) vorgesehen ist, und einen Kreis (c12), der auf das Drehzentrum (O') des Werkzeugs mittig ausgerichtet ist und einen Radius von 10% des Außendurchmessers des Werkzeugs aufweist; und das Drehzentrum (O') des Werkzeugs, und

- die vierte gerade Linie läuft durch einen Überschneidungspunkt (b12) der Kammlinie (16) auf der Rückseite in der Drehrichtung des Werkzeugs der entfernten Endflanke (14), die auf der Vorderseite in der Drehrichtung des Werkzeugs der Kugelschneidkante (15) positioniert ist, auf der der Überschneidungspunkt (a12) festgelegt ist; und das Drehzentrum (O') des Werkzeugs.

7. Kugelschaftfräser nach Anspruch 6, **dadurch gekennzeichnet, dass** eine Breite der entfernten Endflanken (14) auf von 0,005 mm bis zu 3% des Außendurchmessers des Werkzeugs in dem Bereich von 10% des Außendurchmessers des Werkzeugs von dem Drehzentrum (O') des Werkzeugs festgelegt ist.

8. Kugelschaftfräser nach Anspruch 3, **dadurch gekennzeichnet, dass** es sechs Kugelschneidkanten (15) gibt.

**Revendications**

1. Fraise à extrémité sphérique dans laquelle une pluralité de rainures de décharge de copeaux de forme spiralée (12) sont formées sur une circonférence externe d'un corps d'outil (11), d'une extrémité distale vers une extrémité proximale de l'outil, et une arête de coupe (15) de la sphère est ménagée respectivement sur une ligne faîtière d'intersection entre une face de dépouille des rainures de décharge de copeaux (12) et un flanc d'extrémité distale (14) du corps d'outil (11), la fraise à extrémité sphérique ayant deux ou plus d'arêtes de coupe (15) à l'extrémité distale ; ayant une ou plus de rainures (20) qui sont sensiblement en forme de V ou de U en coupe transversale, s'étendent vers l'extérieur du centre de rotation (O') de l'outil et sont ménagées entre des arêtes de coupe respectives (15) de la sphère à l'extrémité distale de l'outil ; et ayant les une ou plus de rainures (20) ménagées de manière à être déplacées d'un angle prédéterminé par rapport à l'arête de coupe (15) de la sphère dans le sens de rotation de l'outil,

dans laquelle :

l'angle prédéterminé est défini comme angle dans lequel un angle (θ) formé par :

- une ligne centrale de chacune des une ou plus de rainures (20) ; et
- une ligne passant à travers l'intersection (23) de la ligne faitière d'intersection (21) entre les flancs (14) de l'extrémité distale et l'arête de coupe (15) de la sphère et un centre de rotation (O') de l'outil,

est réglé pour se situer dans la plage de 20° à un angle de moins 20° formé par des arêtes de coupe adjacentes (15) de la sphère sur le côté arrière dans le sens de rotation de l'outil et
une profondeur (d) des une ou plus de rainures (20) par rapport à l'extrémité la plus distale de l'outil est réglée à 0,2 à 10 % du diamètre externe de l'outil,

**caractérisée en ce que** :
la ligne faitière d'intersection (21) entre les flancs (14) de l'extrémité distale est raccordée à un côté de l'outil de l'arête coupante (15) de la sphère situé au centre de l'outil et les une ou plus de rainures (20) sont ménagées de sorte qu'une partie de la ligne faitière d'intersection (21) vers le côté externe de l'outil subsiste.

2. Fraise à extrémité sphérique selon la revendication 1, **caractérisée en ce que** le diamètre de rotation $\phi D_{23}$ d'une intersection (23) de la ligne faitière d'intersection (21) entre les flancs (14) de l'extrémité distale et l'arête de coupe (15) de la sphère répond à la formule suivante (1) :

$$2 \times (r + 0,01) \times \sin \alpha \geq \phi D_{23} \qquad (1)$$

dans laquelle :

$\alpha = \cos^{-1} (r/(r+0,01))$
r : rayon de l'outil (1/2 du diamètre externe D de l'outil)
$\alpha$ : angle formé par l'axe de rotation de l'outil et une ligne raccordant un point a à une distance du rayon de l'outil r de l'extrémité distale de l'outil sur l'axe de rotation de l'outil et l'intersection (23) de la ligne faitière d'intersection (21) entre les flancs (14) de l'extrémité distale et l'arête de coupe (15) de la sphère.

3. Fraise à extrémité sphérique selon la revendication 2, **caractérisée en ce que** la longueur de la ligne faitière d'intersection (21) entre les flancs (14) de l'extrémité distale est réglée à une valeur de 0,005 mm à 45 % du diamètre de rotation de l'intersection.

4. Fraise à extrémité sphérique selon la revendication 1, **caractérisée en ce qu'**il y a deux arêtes de coupe (15) sur la sphère.

5. Fraise à extrémité sphérique selon la revendication 3, **caractérisée en ce qu'**il y a quatre arêtes coupantes (15) sur la sphère.

6. Fraise à extrémité sphérique selon la revendication 5, **caractérisée en ce qu'**un angle γ12 formé par une troisième ligne droite décrite ci-dessous et une quatrième ligne décrite ci-dessous est réglée à 70° à 88° :

- la troisième ligne droite passe à travers un point d'intersection (a12) de l'arête coupante (15) de la sphère située sur la ligne faitière d'intersection d'un flanc (14) de l'extrémité distale et de la face de dépouille de la rainure de décharge de copeaux (12), et un cercle (c12) centré sur le centre de rotation (O') de l'outil et ayant un rayon de 10 % du diamètre externe de l'outil ; et le centre de rotation (O') de l'outil et
- la quatrième ligne droite passe à travers un point d'intersection (b12) de la ligne faitière (16) sur le côté arrière dans le sens de rotation de l'outil du flanc (14) de l'extrémité distale qui est positionnée sur le côté avant dans le sens de rotation de l'outil de l'arête coupante (15) de la sphère sur laquelle le point d'intersection (a12) est réglé et le cercle (c12) ; et le centre de rotation (O') de l'outil.

7. Fraise à extrémité sphérique selon la revendication 6, **caractérisée en ce que** la largeur des flancs (14) de l'extrémité distale est réglée à une valeur de 0,005 mm à 3 % du diamètre externe de l'outil dans la plage de 10 % du diamètre externe de l'outil à partir du centre de rotation (O') de l'outil.

8. Fraise à extrémité sphérique selon la revendication 3, **caractérisée en ce qu'**il y a six arêtes de coupe (15) sur la sphère.

FIG. 1

FIG. 2

FIG. 3

FIG. 4

FIG. 5

# FIG. 6

## FIG. 7

| No. of cutting edges | γ11 | γ12 | Flank wear width (mm) of the ball cutting edges near the distal end of the tool | Chatter vibration | Machined surface condition | Notes |
|---|---|---|---|---|---|---|
| 4 cutting edges | 52° | 37° | Chipping occurred | Minor vibration | Gouges present | Comp. Ex. 1 |
| | 62° | 58° | 0.037 | Minor vibration | Some gouges present | Comp. Ex. 2 |
| | 72° | 73° | 0.012 | none | No gouges | Ex. 1 |
| | 81° | 88° | 0.014 | none | No gouges | Ex. 2 |

FIG. 8

FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005224898 A
- EP 0950456 A1
- JP 11216608 A
- JP 2001071209 A